# FASCICULE DE BREVET EUROPEEN

(11) **EP 0 442 996 B1**
(45) Date de publication et mention de la délivrance du brevet: **01.04.1998**
(21) Numéro de dépôt: 90912971.0
(22) Date de dépôt: 06.09.1990
(51) Int. Cl.: A01N 3/00

(54) **Procédé de traitement de fleurs coupées**
Verfahren zur Behandlung von Schnittblumen
Method of treatment of cut flowers

(30) Priorité: 11.09.1989 FR 8912201
(43) Date de publication de la demande: 28.08.1991
(73) Titulaire: SARL COMPAGNIE DU NORD, F-59470 Wormhout (FR)
(72) Inventeur: DE WINTER-SCAILTEUR, Nadine, B-1160 Brussel (BE)
(74) Mandataire: Leherte, Georges M.L.M., Dr.
(86) Numéro de dépôt international: BE9000051
(87) Numéro de publication internationale: WO9103160

(56) Documents cités:
- JAPANESE PATENTS GAZETTE, Section CH, Semaine B09, 11 avril 1979, Derwent Publications Ltd., Londres (GB); classe G, p. 16, AN 17109B/09
- PATENT ABSTRACTS OF JAPAN, vol. 11, no. 300 (C-449)(2747), 27 septembre 1987

## Description

Depuis de nombreuses années, on s'est efforcé de créer des fleurs artificielles, en papier, en tissus, en matière plastique afin de satisfaire le besoin décoratif, au moment où les conditions sont telles qu'il n'est pas possible de satisfaire ce besoin par des fleurs naturelles, par raison climatique ou économique.

Les fleurs artificielles sont loin de reproduire l'éclat et la beauté de la fleur naturelle fraîche.

D'autre part la fleur naturelle, comme tout autre organe végétal, est soumise à la décomposition des tissus qui ont cessé de métaboliser. Les organismes saprophytes (bactéries, champignons...) sont responsables de l'altération des qualités florales et de la dégradation finale de la matière organique.

Jusqu'à présent, pour obtenir un prolongement des qualités florales des fleurs naturelles, on a recherché à produire des fleurs séchées ou encore à préserver leur apparence par immersion dans un bain de teinture glycérinée.

C'est ainsi que dans un domaine proche mais différent pour la conservation des rameaux ou branchages de plantes ligneuses, suivant le brevet français n° 1.354.279, on trempe les rameaux dans un bain de mono-éthylène-glycol afin d'éviter le déssèchement de la plante.

D'autre part, dans le brevet américain US-4,828,890,on décrit un procédé pour augmenter la resistance des plantes traitées pour leur préservation par la glycérine au phénomène de porelage (ou sudation). Il s'agit en particulier des plantes exotiques telles que les palmiers, en utilisant le procédé de perfusion consistant en une diffusion uniforme d'un liquide préservatif c.a.d. qui remplace une partie de l'eau présente dans les cellules. Sont utilisés comme liquides préservatifs de solutions à base de glycérine, polyéthylène glycol, propylène glycol.

En réalité aucun de ces procédés n'est utilisé pour la préservation des fleurs coupées.

En effet, la seule possibilité de conservation de la matière constituant les tissus végétaux des fleurs consiste à empêcher l'action destructive des agents de décomposition en les mettant dans un milieu inhospitalier ou abiotique. Ceci implique l'absence quasi complète d'eau.

L'objet de l'invention concerne la préservation de longue durée des fleurs coupées par un traitement gardant constamment leurs propriétés décoratives de fraîcheur apparente.

Le procédé suivant l'invention est caractérisées en ce que l'eau tissulaire des fleurs fraîche est remplacée dans sa totalité par une subtance inaltérable, capable de conserver des fleurs dans un état structurel extrèmement proche de l'aspect frais tant au niveau de la forme, du volume, de la plasticité, que de la couleur même éventuellement du parfum.

Le traitement des fleurs naturelles suivant l'invention implique le remplacement de l'eau tissulaire des fleurs par des substances impropres au métabolisme des agents saprophytes, inaltérables capables de conserver des caractéristiques physico-chimiques constantes, permettant ainsi de conserver des fleurs.

Le traitement des fleurs naturelles suivant l'invention comprend une phase de déshydratation assurant un parfait maintien structural des tissus, suivie d'une phase d'infiltration, elle même suivie d'une phase d'égouttement et de séchage.

En outre le traitement des fleurs naturelles suivant l'invention est caractérisé en ce que l'eau tissulaire est progressivement adsorbée dans les pores d'un tamis moléculaire et remplacée par un polymère à faible poids moléculaire, soluble à l'eau et à certains solvants organiques à savoir le polyéthylène glycol (PEG) de formule générale H - (OCH₂CH₂)n - OH, constitué par un mélange de PEG 400 et de PEG 1000.

D'autres caractéristiques et avantages du traitement des fleurs naturelles suivant l'invention ressortiront de la description d'une réalisation d'un tel traitement.

Dans un premier mode d'exécution d'un traitement des fleurs naturelles suivant l'invention, à titre exemplatif, on installe les fleurs fraîches, pas trop fermées et pas trop épanouies dans un grillage pique-fleurs de manière à ce qu'elles soient bien maintenues sans se toucher.

Ce grillage pique fleurs est formé par une cage de treillis du genre utilisé pour la culture et les compositions florales, permettant le maintien des fleurs dans une position déterminée, de préférence verticale. Les bacs de traitement sont de préférence munis d'un tuyau d'évacuation.

Sont particulièrement indiquées pour un tel traitement les roses, pivoines, camélias, tagètes trolles, orchidées, dahlias, oeillets, phlox, chrysanthèmes d'été, roses trémières etc., et autres espèces à pétales nombreux ou de structure assez rigide.

On dépose ce grillage pique-fleurs rempli de fleurs à traiter dans un récipient spécialement prévu à cet effet, garni d'un lit de tamis moléculaire de porosité allant de 3 à 5 angströms sur une épaisseur de 2 cm. ou plus - de manière à ce qu'il y ait un contact physique assuré entre le tamis et les pétales. L'épaisseur varie en fonction de la quantité de fleurs et en fonction de la quantité d'eau qu'elles dégagent.

Les tamis moléculaires sont des aluminosilicates métalliques possédant une structure cristalline constituée par un assemblage de tétraèdres. Les tétraèdres sont formés par 4 atomes d'oxygène qui occupent les sommets entourant soit 1 atome de silicium, soit un atome d'aluminium placé au centre. Des cations de compensation (sodium - potassium) rendent l'ensemble électriquement neutre. L'ensemble constitue un assemblage de logettes (ou pores) de dimension régulière et connue dans laquelle une molécule de taille inférieure peut être piégée par le phénomène appelé adsorption.

La structure cristalline peut être représentée par la formule : - Na 12 (AlO₂)12 (SiO₂) 12 x H₂O pour la zéolithe de type 3 Å - 4 Å et 5 Å (Ångströms).

Le surface active interne des billes est de 6OO à 7OO m2 par gramme; elles peuvent adsorber de 2O à 3O% de leur propre poids en eau.

Pour assurer la déshydratation des fleurs naturelles fraîche, on verse le mélange de solvants organiques sur l'ensemble jusqu'à ce que le niveau dépasse de près de 2 cm. le niveau des fleurs.

Tandis que les pétales restent mécaniquement soutenus par les liquides remplissant les cellules, l'eau tissulaire est remplacée progressivement et graduellement par les solvants organiques. Les molécules d'eau sont adsorbées progressivement dans les logettes ou pores du tamis moléculaire. Toutes les autres molécules présentant un volume supérieur à la logette ne sont donc pas retenues.

On ferme hermétiquement le récipient et on laisse agir les solvants au minimum 12 heures pour les fleurs de petit volume, aux pétales peu serrés et jusqu'à 24 heures pour des fleurs à pétales denses et serrés.

A la fin de la déshydratation, lorsque les fleurs sont devenues entièrement transparentes et incolores, on sort le grillage contenant les fleurs, on laisse égoutter les solvants pour ensuite transférer le grillage avec les fleurs dans un nouveau récipient pour la phase d'infiltration. Les solvants usagés sont anhydres et récupérés pour usage ultérieur. Le tamis moléculaire utilisé et saturé en eau peut être regénéré par aération et chauffage.

Le récipient pour la phase d'infiltration contient également une couche de tamis moléculaire permettant de capter une éventuelle quantité d'eau résiduelle. Le tamis moléculaire a une porosité préférentielle de 4 Ångströms comme précédemment, asssurant ainsi une déshydratation aussi parfaite que possible durant toutes les phases.

Le récipient est alors rempli d'un mélange de solvants anhydres et de PEG (polyéthylène glycol) selon des proportions dépendant de la structure de la fleur. Ces solvants favorisent la pénétration du produit de remplacement.

Le PEG 1000 n'étant pas utilisable à l'état solide nécessite une solubilisation préalable dans des solvants organiques anhydres qui seront de même nature que ceux utilisés pour la déshydratation afin de favoriser les échanges au sein des cellules. Les critères de selection de ces solvants sont principalement leur pouvoir de solubiliser les PEG, leur pouvoir de pénétraton dans la cellule leur absence d'agressivité vis-à-vis des matières cellulosiques constituant les parois cellulaires, la miscibilité à l'eau et le degré d'évaporabilité limite.

De préférence on utilise le cellosolve ou éther monométhylique du monométhylène glycol, mélangé à l'acétone en propositions variables de 50/50 à 70/3O.

Quant au choix du PEG à utiliser, on cherchera un poids moléculaire approprié à l'état de structure final, celui-ci étant d'autant plus raide que le poids moléculaire est élevé. Un poids moléculaire trop faible n'offrira pas un soutien mécanique suffisant, pour reproduire la turgescence, un poids trop élevé rendant les pétales cassants. Les bonnes propriétés de plasticité sont obtenues par un mélange de PEG 1000 et de PEG 4OO, dont les proportions respectives dépendent de la structure anatomique de la fleur à traiter. Ainsi il faudra plus de PEG 1000 proportionnellement pour une pivoine ou une tagète que pour une rose.

Les proportions varient de 8 à 15 parts de PEG 4OO pour 45 à 70 parts de PEG 1000. La concentration des PEG's par rapport aux solvants varie de 60/65% de PEG's pour 35 à 40% de solvants.

Eventuellement on ajoute 0,5 à 1 part de diéthylène glycol comme solvant surfactant ou assouplissant.

On ajoute également à ce mélange les colorants en fonction des teintes à obtenir. Il s'agit en général de colorants acides, destinés à la teinture de fibres acryliques, solubles dans les solvants utilisés, et se fixant bien sur les matières utilisées.

On ferme le récipient hermétiquement pour éviter l'évaporation. On laisse agir la solution pendant 12 heures au moins, et jusqu'à 24 heures selon le type de fleurs à infiltrer. Un chauffage du bain à 5O/6O°C accroit la vitesse du processus de 3 à 4 fois.

C'est ainsi qu'à titre de variante exemplative, on peut procéder à la phase d'infiltration en deux temps, en laissant agir successivement des mélanges à concentration croissante, p.ex. le premier ayant une concentration à raison de 50% de PEG, le second à une concentration de 70%.

Le mélange polymères solvants va graduellement remplacer le solvant intracellulaire introduit dans la phase de déshydratation jusqu'à ce qu'un équilibre s'établisse, entre la solution intérieure et la solution extérieure. A ce moment les tissus des pétales contiennent du PEG 400, du PEG 1000 et des solvants pour une partie correspondant à 80% du poids frais de la fleur, le reste correspondant aux matières cellulosiques de structure.

On passe alors à la phase d'égouttement et de séchage pour éliminer la partie résiduelle des solvants de manière à ce que les polymères reprennent leur état solide, sans altération ou modification de la structure anatomique des pétales.

A cette fin, le grillage pique-fleurs avec les fleurs infiltrées est déposé sur un nouveau tamis moléculaire cette fois de porosité préférentielle de 10 Ångströms, dont la structure cristalline peut être représentée par la formule Na 86 (AlO₂)86 (SiO₂)106 x H₂O.

Le tamis adsorbe l'eau et les solvants organiques de petit poids moléculaire tout en soutenant mécaniquement les pétales et les empêche de se déformer.

Une fois séchée la fleur réabsorbe un peu d'humidité d'origine atmosphérique ce qui accroît sa souplesse et sa plasticité.

80% du poids frais moyen est restitué après traitement.

Si au départ on possède 10 roses fraîches d'un poids moyen de 55 gr., on obtient :
après séchage à l'air un poids moyen (matière sèche) de 15 gr. - ce qui se traduit par une poids sec de 27% et un poids d'eau de 73%
après infiltration avant séchage un poids moyen de 58 gr.
après infiltration et séchage un poids moyen de 46 gr.

On en déduit le remplacement au sein des tissus de 40 gr. d'eau par 31 gr. de polymère.

Après traitement, les pétales présentent une résistance à la traction assez proche de celle des pétales frais.

La résistance à la pliure, exprimant la souplesse et pouvant être mesurée par l'angle de cassure, est proche de celle des fleurs fraîches. Au sein des pétales de roses fraîches elle approche les 180°; au sein des pétales infiltrés elle varie de 170 à 180°.

Dans la deuxième phase du traitement suivant l'invention précédant,
le récipient est rempli d'un mélange de solvants généralement de méthylglycol, diéthylène glycol et de polyethylène glycol.

Comme la dessication altère fortement les pigments naturels des fleurs, on introduit dans le mélange des colorants présentant une bonne miscibilité avec les produits précédents, tels les colorants textiles pour fibres acryliques.

Un exemple de composition du bain est le suivant:
Méthylglycol 62%
Diéthylène glycol 5%
Polyéthylène glycol 24%
Monopropylène glycol 5%
Eau 4%
Colorants 1 ml/l

Le bain est chauffé aux environs de 90°C, un peu plus si les fleurs sont en boutons, le niveau du bain dépassant d'au moins 5 cm. le niveau des fleurs. On laisse les fleurs tremper à température constante jusqu'à parfaite reconstitution du volume et ouverture optimale du bouton.

Ensuite le panier ou la grille sont retirés du bain, laissés égoutter et sécher pour éliminer des fleurs la partie résiduelle ces solvants de préférence à une température de 40°C.

La coloration obtenue au moyen des colorants introduits avec le mélange polymère/solvants est homogène et durable. On peut constater par observation microscopique que les cellules des tissus floraux sont colorées uniformement par du PEG pigmenté, ce qui offre une preuve suplémentaire de sa pénétration tissulaire par infiltration. Les coupes microscopiques montrent au moins 75% des cellules infiltrées de matières colorées.

Ce procédé permet en outre de produire des fleurs blanchies reproduisant l'éclat naturel des fleurs blanches. La technique consiste à ajouter au cours du processus d'infiltration effectué sans colorants, de 1 à 1O% d'eau oxygénée et O,1 à O,5 % d'acide acétique. Ces produits sont introduits à la fin du processus d'infiltration et laissés en contact durant 2 à 3 heures. Un rinçage à l'acétone contenant 1O% d'eau oxygénée est nécessaire avant la phase de séchage.

## Revendications

1. Procédé de traitement de fleurs coupées en vue du remplacement de leur eau tissulaire par une substance polymère comprenant une phase de déshydratation de fleurs fraîches, suivie d'une phase d'infiltration par un mélange de solvant et de polymère, **caractérisé en ce que** la phase de déshydratation a lieu par adsorption des molécules d'eau tissulaire au moyen d'un tamis moléculaire constitué par des aluminosilicates de formule générale Na₁₂ (AlO₂)₁₂ (SiO₂)₁₂ x H₂O ayant une porosité de 3 à 5 Angströms dans un milieu composé de solvants organiques dans lequel sont plongées les fleurs à traiter, et qu'après la phase de déshydratation les fleurs déshydratées subissent un traitement d'infiltration par un mélange d'un solvant organique anhydre et de polyéthylène glycol (PEG) de formule générale H-(OCH₂CH₂)n - OH, constitué par un mélange de PEG 400 et de PEG 1000.

2. Procédé suivant la revendication 1, **caractérisé en ce que** le traitement d'infiltration est effectué au moyen d'un mélange de 35 à 40% de solvant anhydre pour 60 à 65% de polymère.

3. Procédé suivant une des revendications précédentes, **caractérisé en ce qu**'au mélange d'infiltration est introduit un colorant.

## Claims

1. Processing method for cut flowers in order to replace their tissue fluid with a polymer substance comprising a dehydration phase for fresh flowers, followed by an infiltration phase with a mixture of solvent and polymer, **characterised in that** the dehydration phase takes place by adsorption of molecules of tissue fluid by means of a molecular strainer consisting of aluminosilicates of the general formula Na₁₂ (Alo₂)₁₂ (SiO₂)₁₂ x H₂O having a porosity of 3 to 5 Angstroms in a medium consisting of organic solvents in which the flowers to be treated are plunged, and that after the dehydration phase the dehydrated flowers are subjected to an infiltration phase with a mixture of an anhydrous organic solvent and of polyethylene glycol (PEG) of the general formula H-(OCH₂CH₂)n - OH, consisting of a mixture of PEG 400 and PEG 1000.

2. Method according to claim 1, **characterised in that** the infiltration treatment is effected by means of a mixture of 35 to 40% anhydrous solvent for 60 to 65% polymer.

3. Method according to one of the preceding claims, **characterised in that** a colouring agent is added to the infiltration mixture.

## Patentansprüche

1. Behandlungsverfahren für Schnittblumen im Hinblick auf das Ersetzen ihres Gewebewassers durch eine Polymersubstanz, bestehend aus einer Entwässerungsphase der frischen Blumen, gefolgt von einer Infiltrationsphase durch eine Mischung aus einem Lösemittel und einem Polymer, dadurch gekennzeichnet, dass die Entwässerungsphase stattfindet durch Adsorption der Gewebewassermoleküle mittels eines Molekularsiebes, bestehend aus Aluminosilikaten der allgemeinen Formel Na₁₂ (Al0₂)₁₂ (Si0₂)₁₂ x H₂O mit einer Porosität von 3 bis 5 Angström in einen Medium bestehend aus organischen Lösemitteln in denen die zu behandelnden Blumen getaucht werden, und dass nach der Entwässerungsphase die entwässerten Blumen einer Infiltrationsbehandlung durch eine Mischung aus einem wasserfreien organischen Lösemittel und Polyäthylenglykol (PEG) der allgemeinen Formel H- (OCH₂CH₂)n - OH, zusammengesetzt aus einer Mischung von PEG 400 und PEG 1000, unterzogen werden.

2. Verfahren nach Patentanspruch 1, dadurch gekennzeichnet, dass die Infiltrationsbehandlung mittels einer Mischung aus 35 bis 40% wasserfreiem Lösemittel und 60 bis 65% Polymer.

3. Verfahren nach irgendeinem der vorhergehenden Patentansprüche, dadurch gekennzeichnet, dass der Infiltrationsmischung einen Farbstoff hinzugesetzt wird.
